# EUROPEAN PATENT APPLICATION

(11) **EP 4 556 142 A1**
(43) Date of publication of application: **21.05.2025**
(21) Application number: 23882655.6
(22) Date of filing: 24.10.2023
(51) Int. Cl.: B22F 1/00, B22D 11/00, B22F 1/052, B22F 1/16, B22F 3/24, B22F 9/08, B22F 10/28, B22F 10/34, B22F 10/64, B33Y 10/00, B33Y 70/00, C22C 1/02, C22C 9/06

(54) **COPPER ALLOY POWDER FOR METAL AM AND METHOD FOR MANUFACTURING LAMINATE MOLDED ARTICLE**

(30) Priority: 24.10.2022 JP 2022169922
(71) Applicant: Mitsubishi Materials Corporation, Tokyo 100-8117 (JP)
(72) Inventor: KATO, Jun, Saitama-shi, Saitama 330-8508 (JP); HIRANO, Shingo, Tokyo 100-8117 (JP); OKUBO, Kiyoyuki, Tokyo 100-8117 (JP); KUMAGAI, Satoshi, Sakai-shi, Osaka 590-0906 (JP); IKEDA, Hiroaki, Saitama-shi, Saitama 330-8508 (JP); MINE, Kazuhisa, Naka-shi, Ibaraki 311-0102 (JP); NITA, Nobuyasu, Naka-shi, Ibaraki 311-0102 (JP); KON, Naochika, Naka-shi, Ibaraki 311-0102 (JP)
(74) Representative: Gille Hrabal Partnerschaftsgesellschaft mbB Patentanwälte
(86) International application number: PCT/JP2023/038407
(87) International publication number: WO 2024/090450

(57) **Abstract**

A copper alloy powder for a metal AM includes a copper alloy containing Cr, Si, and Ni, and any one or both of a CrSi-based compound containing Cr and Si and a NiSi-based compound containing Ni and Si are precipitated on a copper crystal grain boundary of a surface of a copper alloy particle constituting the copper alloy powder.

## Description

### Technical Field

The present invention relates to a copper alloy powder for a metal AM most suitable for a metal additive manufacturing (a metal AM) technique, and a method for manufacturing an additive manufacturing product.

Priority is claimed on Japanese Patent Application No. 2022-169922, filed October 24, 2022, the content of which is incorporated herein by reference.

### Background Art

In recent years, as a method for manufacturing metal components having various three-dimensional shapes, metal AM technologies for forming a product by a metal 3D printer using mainly a powder as a raw material have been put into practical use. As major metal AM technologies using metal powders, a powder bed melting method using an electron beam or laser light (powder bed fusion (PBF)), a binder jetting method, and the like are exemplary examples.

Here, copper alloys have many basic characteristics suitable for industrial applications, such as an electrical conductivity, a heat conductivity, a mechanical characteristic, an abrasion resistance, and a heat resistance, and thus is used as a material for various members. Therefore, in recent years, in various fields, such as outer space and electrical-components applications, attempts have been made to form members having various shapes by using a metal AM using a copper alloy powder, and there is increasing needs for copper and copper alloy components manufactured by metal AM.

For example, Patent Document 1 proposes a technology for manufacturing an additive manufacturing product by the metal AM using a copper alloy powder containing any of Cr and Si.

In addition, Patent Document 2 proposes a technology for manufacturing an additive manufacturing product by the metal AM using a copper alloy powder containing Cr and Zr.

### Citation List

### Patent Documents

Patent Document 1:
   Japanese Unexamined Patent Application, First Publication No. 2016-211062
Patent Document 2:
   Japanese Unexamined Patent Application, First Publication No. 2019-070169

### Non-Patent Document

Non-Patent Document 1:
Y. M. Arisoy et. al., "Influence of scan strategy and process parameters on microstructure and its optimization in additively manufactured nickel alloy 625 via laser powder bed fusion", The International Journal of Advanced Manufacturing Technology, Volume 90, p.p. 1393-1417 (2017).

### Summary of Invention

### Technical Problem

A metal structure, which is formed by the metal AM, is used as some kind of structural member according to various applications. Accordingly, when a void exists in an additive manufacturing body or when a microstructure as a metal material is not uniform, there is a problem in terms of thermomechanical or electrical reliability.

Currently, a forming method most often used for the metal AM is laser PBF, and attempts have also been made to forming copper and a copper alloy by the laser PBF.

Meanwhile, in a case of performing an additive manufacturing by a method of irradiating laser light or an electron beam, a thin powder layer is first formed (a powder bed), and laser or an electron beam is locally irradiated to the powder bed to melt and solidify a material. However, compared to other metal materials such as iron, titanium, nickel-based materials and the like, in copper and a copper alloy, there are many problems that a melting behavior of a copper alloy powder becomes unstable during a process of the laser PBF, voids easily occurs in an additive manufacturing product, quality of a formed body manufactured by the laser PBF is not stable, productivity is poor, and the like, due to a high reflectivity of copper itself to light in visible and infrared regions and the like. Therefore, it has been required to improve productivity and the quality of copper and a copper alloy manufactured by the laser PBF.

Currently, the most widely used form of a raw material for the metal AM is a powder. For example, in the metal AM that uses the laser PBF, a melting behavior of the raw powder can be affected by optical absorption characteristics of electromagnetic waves in particles, which is determined by a coupling-interaction between surface layers of each particle in a raw powder and the electromagnetic waves irradiated, and this melting behavior of the raw powder greatly affects productivity of components and quality of components, including a defect density of components. For example, in a metal AM process that uses a powder bed, a thickness of the powder bed formed in a single additive manufacturing process is, for example, approximately several ten µm (Non-Patent Document 1), the raw powder is melted by irradiating a relatively thin powder bed with converged electromagnetic waves, and furthermore, a desired formed structure can be realized through a large number of repetition of additive manufacturing process and subsequent melting and solidification (processes). The absorption characteristics of electromagnetic waves in a solid greatly affect an elementary process in such the additive manufacturing processes using the powder bed. For example, because the absorption characteristics of the electromagnetic waves in a solid are affected by a material composition, it is extremely important to increase uniformity of material composition and a microstructure of the powder for realization of stable quality and high productivity in the entire additive manufacturing product.

Here, the absorption characteristics of the electromagnetic waves of copper and the copper alloy can be improved by, for example, simply adding a substance having a desired high absorption rate at a laser wavelength as a component other than copper. However, as shown in many past metallurgical studies, in a case where copper and the copper alloy are provided for a certain application, characteristics required for the application are realized for the first time by suitably selecting a kind of an element to be added to copper and the amount added thereof. Accordingly, a simple approach, such as adding various types of different elements having a high laser absorption rate to copper or a copper alloy having an optimized composition or increasing the amount added thereof, in order to improve the productivity and the quality of the metal AM formed body of copper or the copper alloy, in other words, in order to improve laser absorption of a raw material powder of copper or the copper alloy, may deteriorate performance of the copper alloy required for various applications. Therefore, it has been required to realize a copper alloy powder for the metal AM having improved laser absorption characteristics while maintaining a material composition capable of sufficiently ensuring the performance of the copper alloy required for various applications.

One important approach to improve the laser absorption characteristics of the powder is to improve a laser absorption ability of each particle by surface modification of each particle surface constituting the powder. For this surface modification, it is considered to coat the surface of each particle of the powder having a desired copper alloy composition with a substance exhibiting a high absorption rate with respect to a laser wavelength used in the metal AM. As an approach to such coating of the particle surface, a desired coating material can be formed on the particle surface using a wet process or a gas phase process. However, in such a coating process, there are problems in not only controlling a thickness of a coating layer on each particle, but also in the reproducibility of a coating thickness of the entire powder and homogeneity of the coating material. As a result, various problems occur in productivity or quality of a formed body.

In addition, for the copper alloy, as a result of various research and development in the past, a material that realizes a high mechanical strength while maintaining a high electrical conductivity, a material having an excellent heat resistance, and the like have been already developed. Even in the metal AM, there is a social demand for realizing a metal AM component having a desired shape using existing high-performance copper alloy materials.

However, when the material composition of the copper alloy of a final formed product was controlled while controlling amounts of components in the materials formed by coating, it became a large load of a manufacturing step, and also, there was a risk of causing many major problems regarding a deterioration in performance of a formed component caused by a variation in a composition or a variation in a microstructure, a deterioration in mass productivity of components, maintaining quality of components, and the like.

In addition, one factor that causes structural defects in the metal AM formed body is generation of voids caused by involution of a gas or the like. In a case where the laminating and forming was performed by a PBF method using a copper alloy powder of the related art, a gas was generated due to impurities contained in the copper alloy powder at the time of melting the powder, a molten copper alloy or a solidified copper alloy trapped a gas component, voids were generated in the additive manufacturing product, and there was a risk that a stable high-quality additive manufacturing product could not be manufactured.

In addition, in a case of performing the additive manufacturing by irradiating the powder bed of the raw material with laser light or electron beams, and in a case where there is a lack of reproducibility of the microstructure related to a raw material powder including a composition reproducibility of powder particles in each portion irradiated with laser light or the like, a melting behavior of the powder is not uniform. As a result, there was a risk that this induced occurrence of structural defects of voids and the like in the formed body or a deterioration of mechanical characteristics due to the nonuniformity of the metal composition of the formed body occurred.

In addition, such reproducibility of the microstructure of the raw material powder includes reproducibility of the material composition of the powder, and has been the same problem even in other metal AM methods such as a binder jetting method. In the metal AM of the copper alloy, the improvement of the productivity was a major object due to the problems with a variety of raw materials as described above.

The present invention has been made in view of the circumstances described above, and an object thereof is to provide a copper alloy powder for the metal AM having a high reproducibility of a microstructure of a formed body manufactured by the metal AM and capable of stably manufacturing a high-quality additive manufacturing product with less structural defects such as voids and the like, and a method for manufacturing an additive manufacturing product.

### Solution to Problem

From the viewpoints described above, the present inventors have conducted research and development to manufacture a copper alloy powder for realizing a copper alloy component having high performance and high quality with high productivity by using a metal AM process while having a copper alloy composition required for practical applications. As a result, in a case where a powdering treatment was performed using a high-purity copper alloy as a raw material, when individual particle surface in a copper alloy powder is focused while maintaining a uniform composition with less impurities as a whole of the copper alloy powder, it was found that a thin layer is formed on a copper alloy particle surface irradiated with laser. In addition, compared to the inside of bulk copper alloy particles, in the thin layer formed on the copper alloy particle surface, it was found that a characteristic structure, in which a powder constituent element showing a high laser absorption than copper is present with high frequency, is spontaneously generated in a direct powdering process from a copper alloy raw material without performing an individual coating process or an additive process on the powder. In addition to the structural characteristics of the copper alloy particle surface, it is found that, since the copper alloy powder for the metal AM is a copper alloy powder derived from a high-purity copper alloy raw material, the generation of a gas is suppressed during melting due to the small amount of impurities that lead to a gas component, and it is possible to manufacture a copper alloy powder for the metal AM capable of realizing a dense copper alloy formed body while having high thermal, electrical, and mechanical characteristics, and capable of realizing high productivity and high quality of the copper alloy formed body exhibiting high performance.

Specifically, it was found that, in a case where a copper alloy powder is manufactured using, as a raw material, a copper alloy ingot containing Cr, Ni, and Si, in which the amount of impurities is sufficiently reduced, a CrSi-based compound was uniformly precipitated on a copper crystal grain boundary of copper alloy particle constituting the powder. In addition, the present inventors have obtained the findings that, in a case where the laminating forming is performed using the present powder, it is possible to reduce occurrence of structural defects such as voids and the like.

The present invention has been made based on the findings described above, and a copper alloy powder for the metal AM according to Aspect 1 of the present invention, which is used for the metal AM, includes a copper alloy containing Cr, Si, and Ni, and any one or both of a CrSi-based compound containing Cr and Si and a NiSi-based compound containing Ni and Si are precipitated on a copper crystal grain boundary of a surface of a copper alloy particle constituting the copper alloy powder.

According to the copper alloy powder for a metal AM of Aspect 1 of the present invention, the copper alloy powder for the metal AM includes the copper alloy containing Cr, Si, and Ni, and any one or both of the CrSi-based compound containing Cr and Si and the NiSi-based compound containing Ni and Si are precipitated on the copper crystal grain boundary of the surface of the copper alloy particle constituting the copper alloy powder. Accordingly, the reproducibility of a microstructure of a formed body manufactured by the metal AM is high, and it is possible to stably manufacture a high-quality additive manufacturing product with less structural defects such as voids and the like.

According to Aspect 2 of the present invention, in the copper alloy powder for the metal AM according to Aspect 1, it is preferable that any one or both of the CrSi-based compound and the NiSi-based compound are precipitated on a copper crystal grain of the surface of the copper alloy particle constituting the copper alloy powder.

According to the copper alloy powder for the metal AM of Aspect 2 of the present invention, any one or both of the CrSi-based compound and the NiSi-based compound are also precipitated on the copper crystal grain of the surface of the copper alloy particle constituting the copper alloy powder. Accordingly, the reproducibility of a microstructure of a formed body manufactured by the metal AM is further high, and it is possible to further stably manufacture a high-quality additive manufacturing product with less structural defects such as voids and the like.

According to Aspect 3 of the present invention, in the copper alloy powder for the metal AM according to Aspect 1 or 2, it is preferable that a layer containing any one or both of the CrSi-based compound and the NiSi-based compound are formed on a particle surface of the copper alloy powder.

According to the copper alloy powder for the metal AM of Aspect 3 of the present invention, the layer containing any one or both of the CrSi-based compound and the NiSi-based compound are formed on the particle surface of the copper alloy powder. Accordingly, the reproducibility of a microstructure of a formed body manufactured by the metal AM is high, and it is possible to stably manufacture a higher-quality additive manufacturing product with less structural defects such as voids and the like.

According to Aspect 4 of the present invention, in the copper alloy powder for the metal AM according to Aspect 3, it is preferable that the layer containing any one or both of the CrSi-based compound and the NiSi-based compound formed on the particle surface of the copper alloy powder contains oxygen.

According to the copper alloy powder for the metal AM of Aspect 4 of the present invention, the layer containing any one or both of the CrSi-based compound and the NiSi-based compound on the particle surface contains oxygen. Accordingly, alteration of the powder can be suppressed, the reproducibility of a microstructure of a formed body manufactured by the metal AM is high, and it is possible to stably manufacture a higher-quality additive manufacturing product with less structural defects such as voids and the like.

According to Aspect 5 of the present invention, in the copper alloy powder for the metal AM according to any one of Aspects 1 to 4, it is preferable that, in a cross-sectional observation of the copper alloy particle constituting the copper alloy powder, any one or both of the CrSi-based compound and the NiSi-based compound are distributed on the copper crystal grain boundary.

According to the copper alloy powder for the metal AM of Aspect 5 of the present invention, in the cross-sectional observation of the particle constituting the copper alloy powder, any one or both of the CrSi-based compound and the NiSi-based compound are distributed on the copper crystal grain boundary. Accordingly, it is possible to manufacture an additive manufacturing product having excellent electrical conductivity, heat conductivity, and intensity.

According to Aspect 6 of the present invention, in the copper alloy powder for the metal AM according to any one of Aspects 1 to 5, it is preferable that the copper alloy has a composition containing Cr in a range of 0.1 mass% or more and 0.8 mass% or less, Si in a range of 0.4 mass% or more and 0.8 mass% or less, Ni in a range of 1.8 mass% or more and 3.0 mass% or less, and a balance consisting of copper and impurities.

According to the copper alloy powder for the metal AM of Aspect 6 of the present invention, the copper alloy constituting the copper alloy powder for the metal AM has the composition described above. Accordingly, by performing a suitable heat treatment with respect to an additive manufacturing product manufactured using the copper alloy powder for the metal AM, a compound can be precipitated, and it is possible to manufacture an additive manufacturing product having excellent electrical conductivity, heat conductivity, and intensity.

According to Aspect 7 of the present invention, in the copper alloy powder for the metal AM according to any one of Aspects 2 to 6, it is preferable that the CrSi-based compound contains Cr₃Si.

According to the copper alloy powder for the metal AM of Aspect 7 of the present invention, the CrSi-based compound contains Cr₃Si. Accordingly, the reproducibility of a fine structure of a formed body manufactured by the metal AM is high, and it is possible to stably manufacture a higher-quality additive manufacturing product with less structural defects such as voids and the like.

According to Aspect 8 of the present invention, in the copper alloy powder for the metal AM according to any one of Aspects 2 to 7, it is preferable that the NiSi-based compound contains Ni₅Si₂.

According to the copper alloy powder for the metal AM of Aspect 8 of the present invention, the NiSi-based compound contains Ni₅Si₂. Accordingly, the reproducibility of a microstructure of a formed body manufactured by the metal AM, and it is possible to stably manufacture a higher-quality additive manufacturing product with less structural defects such as voids and the like.

According to Aspect 9 of the present invention, in the copper alloy powder for the metal AM according to any one of Aspects 1 to 8, it is preferable that a 50% cumulative particle diameter D50 based on a volume, which is measured by a laser diffraction and scattering method, is set to be in a range of 5 µm or more and 120 µm or less.

According to the copper alloy powder for the metal AM of Aspect 9 of the present invention, the 50% cumulative particle diameter D50 based on the volume measured by the laser diffraction and scattering method is set to be in a range of 5 µm or more and 120 µm or less. Accordingly, a particle size distribution is suitable for the metal AM, and it is possible to stably manufacture an additive manufacturing product.

According to Aspect 10 of the present invention, in the copper alloy powder for the metal AM according to any one of Aspects 1 to 9, it is preferable that a 10% cumulative particle diameter D10 based on the volume measured by a laser diffraction and scattering method is set to be in a range of 1 µm or more and 80 µm or less.

According to the copper alloy powder for the metal AM of Aspect 10 of the present invention, the 10% cumulative particle diameter D10 based on the volume measured by the laser diffraction and scattering method is set to be in a range of 1 µm or more and 80 µm or less. Accordingly, a particle size distribution is suitable for the metal AM, and it is possible to stably manufacture an additive manufacturing product.

According to Aspect 11 of the present invention, in the copper alloy powder for the metal AM according to any one of Aspects 1 to 10, it is preferable that a 90% cumulative particle diameter D90 based on a volume, which is measured by a laser diffraction and scattering method, is set to be in a range of 10 µm or more and 150 µm or less.

According to the copper alloy powder for the metal AM of Aspect 11 of the present invention, the 90% cumulative particle diameter D90 based on the volume measured by the laser diffraction and scattering method is set to be in a range of 10 µm or more and 150 µm or less. Accordingly, a particle size distribution is suitable for the metal AM, and it is possible to stably manufacture an additive manufacturing product.

A method for manufacturing an additive manufacturing product of Aspect 12 of the present invention includes a preparation step of preparing the copper alloy powder for the metal AM according to any one of Aspects 1 to 11, and a forming step of manufacturing an additive manufacturing product by sequentially repeating a first step of forming a powder bed including the copper alloy powder for the metal AM and a second step of forming an additive product by melting and solidifying the copper alloy powder for the metal AM at a predetermined position in the powder bed to manufacture an additive manufacturing product.

According to the method for manufacturing the additive manufacturing product of Aspect 12 of the present invention, the copper alloy powder for the metal AM according to any one of Aspects 1 to 11 is used. Accordingly, the reproducibility of a microstructure of a formed body manufactured by the metal AM is high, and it is possible to stably manufacture a high-quality additive manufacturing product with less structural defects such as voids and the like.

According to Aspect 13 of the present invention, in the method for manufacturing the additive manufacturing product according to Aspect 12, it is preferable that the method further includes a heat treatment step of performing a heat treatment in a temperature range of 300°C or higher and a melting point of pure copper or lower after the forming step.

By performing a suitable heat treatment according to the application of the manufactured additive manufacturing product, a microstructure of the formed copper alloy can be controlled, and desired mechanical characteristics or electrical conductive characteristics can be realized. Since the heat treatment is performed in the temperature range of the method for manufacturing the additive manufacturing product according to Aspect 13 of the present invention, a formed body of a copper alloy, in which the microstructure is suitably controlled, is realized.

According to Aspect 14 of the present invention, in the method for manufacturing the additive manufacturing product according to Aspect 12, it is preferable that the method further includes, after the forming step, a first heat treatment step of performing a heat treatment in a temperature range of 800°C or higher and a melting point of pure copper or lower, and a second heat treatment step of performing a heat treatment in a temperature range of 300°C or higher and lower than 800°C after the first heat treatment.

Even by performing the two-stage heat treatment under the temperature conditions described above, it is possible to realize a copper alloy having a desired microstructure.

### Advantageous Effects of Invention

According to the present invention, it is possible to provide a copper alloy powder for the metal AM having a high reproducibility of a microstructure of a formed body manufactured by the metal AM and capable of stably manufacturing a high-quality additive manufacturing product with less structural defects such as voids and the like, and a method for manufacturing an additive manufacturing product.

### Brief Description of Drawings

FIG. 1 is a schematic explanatory diagram of a copper alloy particle constituting a copper alloy powder for the metal AM of the present embodiment.
FIG. 2A is an analysis result obtained by Auger electron spectroscopy of a particle surface after performing etching for 15 minutes from a particle outermost surface of a copper alloy particle constituting a copper alloy powder for the metal AM of the present embodiment, and is a secondary electron image.
FIG. 2B is an analysis result obtained by Auger electron spectroscopy of a particle surface after performing etching for 15 minutes from a particle outermost surface of a copper alloy particle constituting a copper alloy powder for the metal AM of the present embodiment, and is a Cr mapping image.
FIG. 2C is an analysis result obtained by Auger electron spectroscopy of a particle surface after performing etching for 15 minutes from a particle outermost surface of a copper alloy particle constituting a copper alloy powder for the metal AM of the present embodiment, and is a Si mapping image.
FIG. 2D is an analysis result obtained by Auger electron spectroscopy of a particle surface after performing etching for 15 minutes from a particle outermost surface of a copper alloy particle constituting a copper alloy powder for the metal AM of the present embodiment, and is a Ni mapping image.
FIG. 2E is an analysis result obtained by Auger electron spectroscopy of a particle surface after performing etching for 15 minutes from a particle outermost surface of a copper alloy particle constituting a copper alloy powder for the metal AM of the present embodiment, and is an element mapping combined image.
FIG. 3A is an analysis result obtained by Auger electron spectroscopy of a particle surface of a copper alloy particle constituting a copper alloy powder for the metal AM of the present embodiment, and is a secondary electron image of a particle outermost surface before etching.
FIG. 3B is an analysis result obtained by Auger electron spectroscopy of a particle surface of a copper alloy particle constituting a copper alloy powder for the metal AM of the present embodiment, and is a Cr mapping image of a particle outermost surface before etching. An arrow indicates presence of Cr-based precipitates on a copper crystal particle.
FIG. 3C is an analysis result obtained by Auger electron spectroscopy of a particle surface of a copper alloy particle constituting a copper alloy powder for the metal AM of the present embodiment, and is a Cr mapping image of the particle surface after performing etching from a particle outermost surface for 5 minutes. An arrow indicates presence of Cr-based precipitates on a copper crystal particle.
FIG. 3D is an analysis result obtained by Auger electron spectroscopy of a particle surface of a copper alloy particle constituting a copper alloy powder for the metal AM of the present embodiment, and is a Cr mapping image of the particle surface after performing etching from a particle outermost surface for 15 minutes. An arrow indicates presence of Cr-based precipitates on a copper crystal particle.
FIG. 3E is an analysis result obtained by Auger electron spectroscopy of a particle surface of a copper alloy particle constituting a copper alloy powder for the metal AM of the present embodiment, and is a Cr mapping image of the particle surface after performing etching from a particle outermost surface for 30 minutes.
FIG. 3F is an analysis result obtained by Auger electron spectroscopy of a particle surface of a copper alloy particle constituting a copper alloy powder for the metal AM of the present embodiment, and is a Cr mapping image of the particle surface after performing etching from a particle outermost surface for 50 minutes.
FIG. 4 is an example of intensity depth profiles of oxygen, copper, chromium, and silicon obtained by Auger electron spectroscopy of a particle surface of a copper alloy powder for the metal AM of the present embodiment.
FIG. 5A is a result of Auger electron spectroscopy with respect to a particle cross section of a copper alloy powder for the metal AM of the present embodiment, and is a secondary electron image.
FIG. 5B is a result of Auger electron spectroscopy with respect to a particle cross section of a copper alloy powder for the metal AM of the present embodiment, and is an element mapping image of Cr.
FIG. 5C is a result of Auger electron spectroscopy with respect to a particle cross section of a copper alloy powder for the metal AM of the present embodiment, and is an element mapping image of Ni (an arrow indicates a position of Ni).
FIG. 5D is a result of Auger electron spectroscopy with respect to a particle cross section of a copper alloy powder for the metal AM of the present embodiment, and is an element mapping image of Si.
FIG. 6 is a flowchart of a method for manufacturing a copper alloy powder for the metal AM of the present embodiment.
FIG. 7 is a schematic explanatory diagram of a continuous casting apparatus used in manufacturing a copper alloy powder for the metal AM of the present embodiment.
FIG. 8 is a flowchart showing a method for manufacturing an additive manufacturing product of the present embodiment.
FIG. 9 is a schematic explanatory diagram of another continuous casting apparatus used in manufacturing a copper alloy powder for the metal AM of the present embodiment.
FIG. 10 is an example of an analysis result of a high-angle annular dark field scanning transmission electron microscopy (HAADF-STEM) of a particle surface of a copper alloy powder for the metal AM of the present embodiment, (A) shows a HAADF image, (B) shows Cu mapping, (C) shows Si mapping, and (D) shows Cr mapping.
FIG. 11 is a result of electron diffraction analysis of a particle surface of a copper alloy powder for the metal AM of the present embodiment performed with a transmission electron microscope, (A) shows a bright field image, (B) shows an electron diffraction pattern of a Cu part (Cu[1-10]), and (C) shows an electron diffraction pattern of a CrSi-based compound derived from a CrSi-based precipitate (Cr₃Si[01-2]). Description of Embodiments

Hereinafter, a copper alloy powder for the metal AM of an embodiment of the present invention will be described with reference to the accompanying drawings.

The copper alloy powder for the metal AM of the present embodiment is a copper alloy powder used for the metal AM. The copper alloy powder for the metal AM of the present embodiment is particularly suitable for a PBF method using laser.

The copper alloy powder for the metal AM of the present embodiment is an aggregate of particles constituted with a copper alloy containing Cr, Si, and Ni, and any one or both of a CrSi-based compound containing Cr and Si and a NiSi-based compound containing Ni and Si are precipitated on a copper crystal grain boundary of a surface of a copper alloy particle constituting the copper alloy powder for the metal AM.

In the copper alloy powder for the metal AM of the present embodiment, it is preferable that any one or both of the CrSi-based compound containing Cr and Si and the NiSi-based compound containing Ni and Si are also precipitated on the copper crystal grain of the surface of the copper alloy particle constituting the copper alloy powder.

Here, in the present embodiment, a surface (a particle surface)(or a surface layer) of a copper alloy particle of the copper alloy powder for the metal AM refers to a region from an outermost surface of the particle to a depth of 100 nm.

In addition, in a copper alloy particle 50 of the copper alloy powder for the metal AM of the present embodiment, a CrSiNi-containing layer 52 containing any one or both of the CrSi-based compound and the NiSi-based compound are formed on a particle surface.

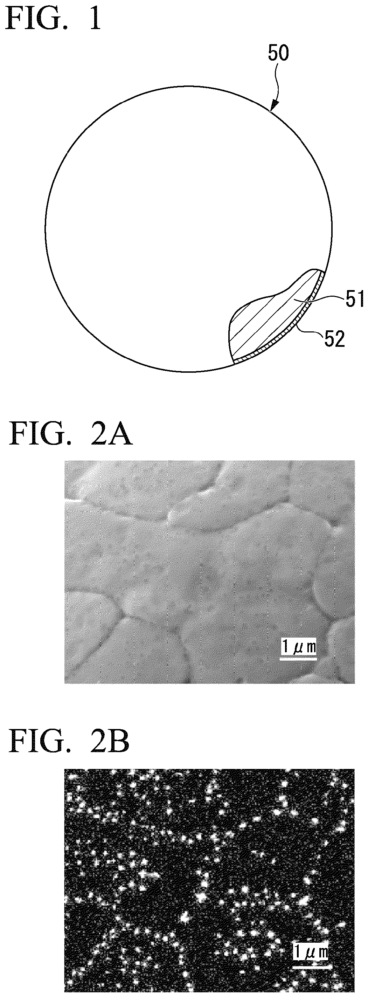

That is, as shown in FIG. 1, it is preferable that the copper alloy particle 50 of the copper alloy powder for the metal AM of the present embodiment includes a particle main body 51 consisting of a copper alloy containing Cr, Ni, and Si, and the CrSiNi-containing layer 52 containing any one or both of the CrSi-based compound containing Cr and Si and the NiSi-based compound containing Ni and Si on an outer peripheral surface (or a surface layer) of this particle main body 51.

Specifically, as the CrSi-based compound included in the CrSiNi-containing layer 52, Cr₃Si is an exemplary example. In addition, specifically, as the NiSi-based compound included in the CrSiNi-containing layer 52, Ni₅Si₂ is an exemplary example. As described above, the CrSiNi-containing layer 52 can contain any one or both of Cr₃Si and Ni₅Si₂.

The CrSiNi-containing layer 52 may contain a copper alloy containing Cr, Si, and Ni and an oxide of the copper alloy, in addition to the CrSi-based compound and the NiSi-based compound. In addition, as the oxide, an oxide of Cr, Si, or Ni may be contained. The oxide may be formed when the copper alloy powder for the metal AM is exposed to an oxygen-containing atmosphere, a moisture-containing atmosphere, or the like.

In addition, the thickness of the CrSiNi-containing layer 52 on the particle surface of the copper alloy powder for the metal AM is preferably set to 1 nm or more and 100 nm or less.

More specifically, the thickness of the CrSiNi-containing layer 52 is preferably 1 nm or more, and may be 5 nm or more, may be 10 nm or more, may be 20 nm or more, may be 30 nm or more, or may be 50 nm or more. In addition, the thickness of the CrSiNi-containing layer 52 is preferably 100 nm or less, and may be 95 nm or less, may be 90 nm or less, may be 80 nm or less, or may be 70 nm or less.

The CrSiNi-containing layer 52 is a layer disposed on an outer peripheral surface (or a surface layer) of the particle main body 51, and is preferably a layer containing any one or both of the CrSi-based compound containing Cr and Si and the NiSi-based compound containing Ni and Si. In the CrSiNi-containing layer 52, the CrSi-based compound and/or the NiSi-based compound may be in a state of being included to be uniformly or unevenly dispersed in the CrSiNi-containing layer 52 as a dot-shaped precipitate. In the CrSiNi-containing layer 52, the CrSi-based compound and/or the NiSi-based compound may be in a state of being included to be uniformly or unevenly dispersed in the CrSiNi-containing layer 52 as a precipitate having a plurality of indeterminate aggregated island shapes (an indeterminate aggregates).

In addition, the CrSi-based compound and/or the NiSi-based compound may be precipitated along a copper crystal grain boundary on a surface of each particle main body 51.

In the CrSiNi-containing layer 52, the CrSi-based compound and/or the NiSi-based compound may be in a state of being precipitated to continuously coat the outer peripheral surface (or the surface layer) of the particle main body 51. At this time, the entire outer peripheral surface of the particle main body 51 may be coated with the CrSi-based compound and/or the NiSi-based compound, or a part (for example, 50% or more of the outer peripheral surface) of the outer peripheral surface (or the surface layer) may be continuously coated. A part (for example, 50% or more of the outer peripheral surface) of the outer peripheral surface (or the surface layer) of the particle main body 51 may be coated discontinuously (or in an island shape).

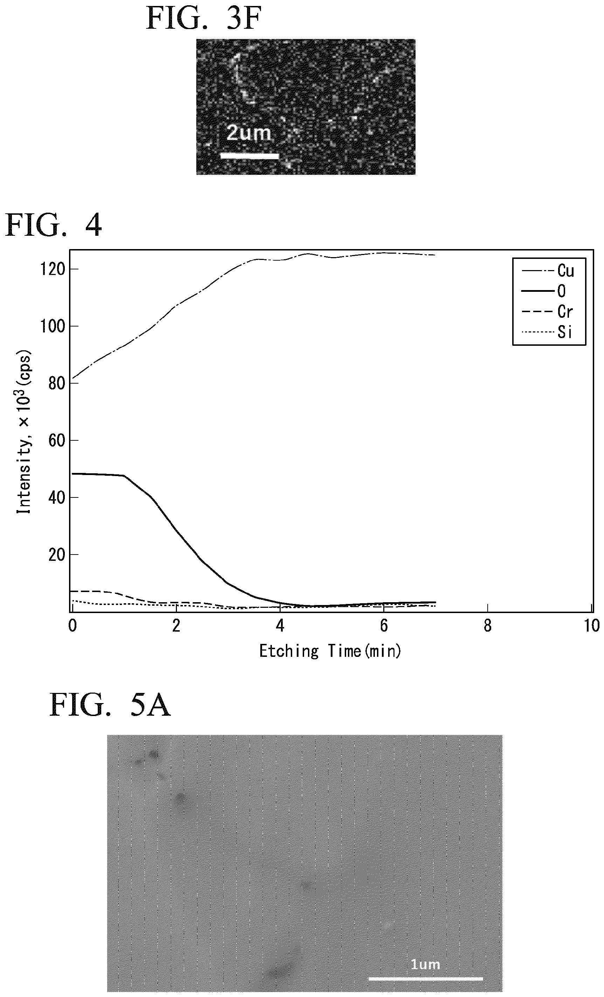

A condition, in which a particle surface consisting of SiO₂ is etched by an ion etching method at an etching rate of 1.08 nm/min, is set as a reference condition, and in this reference etching condition, the thickness of the CrSiNi-containing layer 52 can be calculated from time when each intensity (cps) of chromium (Cr) and/or silicon (Si) does not decrease or becomes a predetermined value or less, by etching the surface of the copper alloy particle 50 of the copper alloy powder for the metal AM, analyzing the surface of the copper alloy particle 50 of the copper alloy powder for the metal AM by Auger electron spectroscopy using a scanning Auger electron spectroscopy analysis apparatus PHI700xi manufactured by ULVAC-PHI, INCORPORATED, obtaining a Cr mapping image showing the CrSi-based compound and a Si mapping image showing the NiSi-based compound, and obtaining an intensity depth profile (a graph showing a relationship between intensity-etching time shown in FIG. 4) of chromium (Cr) and/or silicon (Si).

That is, the thickness of the CrSiNi-containing layer 52 can be calculated as follows: time (min) when each intensity (cps) of chromium (Cr) and silicon (Si) does not decrease or becomes a predetermined value or less × the etching rate of 1.08 nm/min in the reference condition = thickness of CrSiNi-containing layer 52.

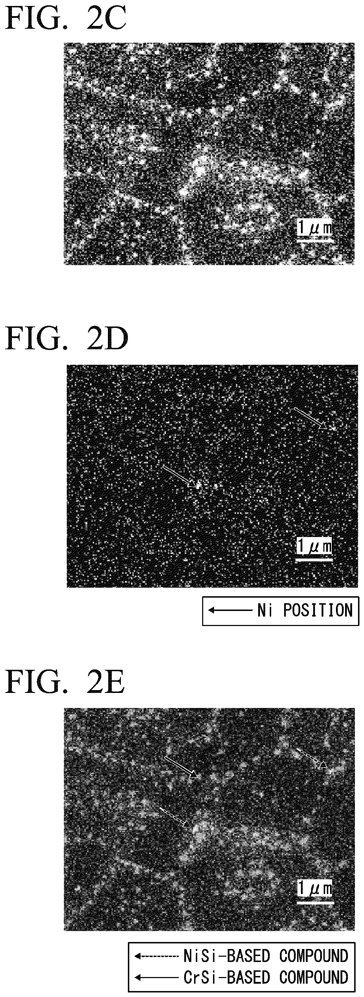

As an example, as shown in FIGS. 2A to 2E, it is confirmed that the particle main body 51 of copper alloy particle 50 of the copper alloy powder for the metal AM of the present embodiment is polycrystalline, and any one or both of the CrSi-based compound containing Cr and Si and the NiSi-based compound containing Ni and Si are dispersed on the surface of the particle main body 51. Any one or both of the CrSi-based compound containing Cr and Si and the NiSi-based compound containing Ni and Si are dispersed on both of a copper crystal grain boundary and a copper crystal grain (a copper crystal grain surface).

At this time, in the present embodiment, the diameter or the major axis along the particle surface of the CrSi-based compound derived from a Cr-based precipitate and/or the NiSi-based compound derived from a Ni-based precipitate present in the CrSiNi-containing layer 52 is preferably set to be in a range of 1 nm or more than 1,000 nm or less.

The upper limit of the diameter or the major axis along the particle surface of the CrSi-based compound and/or the NiSi-based compound may be 800 nm or less, may be 500 nm or less, may be 300 nm or less, may be 100 nm or less, or may be 80 nm or less. In addition, the lower limit of the diameter or the major axis along the particle surface of the CrSi-based compound and/or the NiSi-based compound may be 5 nm or more or may be 10 nm or more, and the upper limit thereof may be 90 nm or less or may be 80 nm or less.

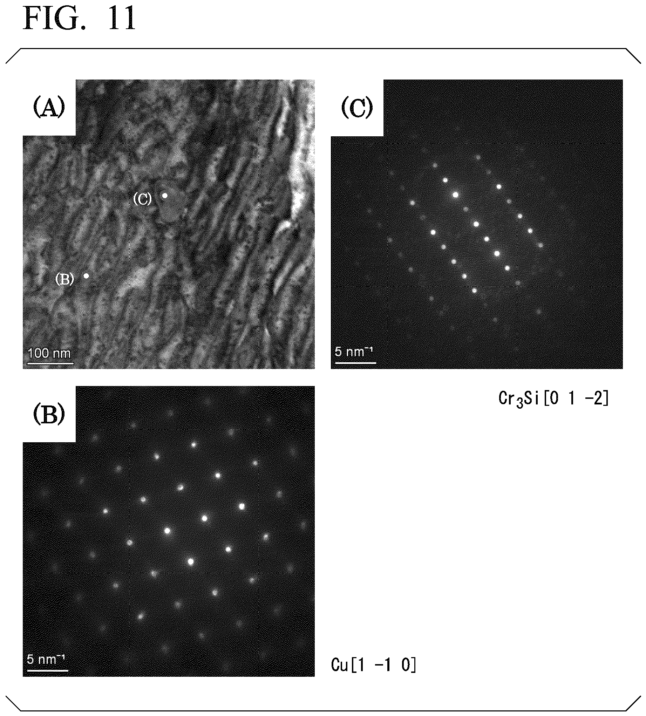

In addition, as shown in FIGS. 2A to 2E and FIG. 11, it is confirmed that the particle main body 51 of copper alloy particle 50 of the copper alloy powder for the metal AM of the present embodiment is polycrystalline, and Cr₃Si containing Cr and Si is formed on the surface of the particle main body 51.

In the present embodiment, the diameter or the major axis along the particle surface of Cr₃Si derived from the Cr-based precipitate, which is present in the CrSiNi-containing layer 52, is preferably set to be in a range of 1 nm or more and 1,000 nm or less.

The upper limit of the diameter or the major axis along the particle surface of the Cr₃Si derived from the Cr-based precipitate may be 800 nm or less, may be 500 nm or less, may be 300 nm or less, may be 100 nm or less, or may be 80 nm or less. In addition, the lower limit of the diameter or the major axis along the particle surface of the Cr₃Si derived from the Cr-based precipitate may be 5 nm or more or may be 10 nm or more, and the upper limit thereof may be 90 nm or less or may be 80 nm or less.

Specifically, the diameter or the major axis along the particle surface of the CrSi-based compound and/or the NiSi-based compound is the diameter or the major axis of each aggregate of a precipitate of each CrSi-based compound and/or each NiSi-based compound along the outer peripheral surface of the particle main body 51, in a case where the CrSi-based compound and/or the NiSi-based compound is dispersed in a dotted shape or in an undetermined island shape on the outer peripheral surface of the particle main body 51, and can be measured from an image obtained by analyzing the outer peripheral surface of the particle main body 51 by Auger electron spectroscopy using a scanning Auger electron spectroscopy analysis apparatus PHI700xi manufactured by ULVAC-PHI, INCORPORATED.

In addition, in a case where the precipitates derived from the CrSi-based compound and/or the NiSi-based compound are dispersed on the surface of the particle main body 51 of the copper alloy particle 50 of the copper alloy powder for the metal AM of the present embodiment, regarding a density of precipitates derived from the CrSi-based compound and/or the NiSi-based compound of the CrSiNi-containing layer 52, a part having an area ratio of 15% or more can be observed or it is preferable that a part having an area ratio of 20% or more can be observed, on any part of an outermost surface of the CrSiNi-containing layer 52.

The density of precipitates derived from the CrSi-based compound and/or the NiSi-based compound in the CrSiNi-containing layer 52 can be obtained by calculating the area occupancy rate of the CrSi-based compound and/or each NiSi-based compound from a size and a concentration of precipitates of the CrSi-based compound and/or the NiSi-based compound per 1 µm² using an image obtained by analyzing the outermost surface of the CrSiNi-containing layer 52 by Auger electron spectroscopy using a scanning Auger electron spectroscopy analysis apparatus PHI700xi manufactured by

### ULVAC-PHI, INCORPORATED.

In a case where the precipitate derived from the CrSi-based compound and/or each NiSi-based compound in the CrSiNi-containing layer 52 is precipitated along the copper crystal grain boundary of the surface of the particle main body 51, or in a case where the surface of the particle main body 51 is observed using Auger electron spectroscopy, the copper crystal grain boundary can be captured as a line. In this case, a density (a line density) per unit length of the copper crystal grain boundary of the precipitate derived from the CrSi-based compound and/or each NiSi-based compound can be obtained.

The copper crystal grain boundary of the image obtained by analyzing the outermost surface of the CrSiNi-containing layer 52 by Auger electron spectroscopy using a scanning Auger electron spectroscopy analysis apparatus PHI700xi manufactured by ULVAC-PHI, INCORPORATED, is observed, and the line density per grain boundary length of 1 µm may be obtained from a proportion of the precipitate derived from the CrSi-based compound and/or each NiSi-based compound occupying the grain boundary length of 1 µm. In this case, it is preferable that a portion having the line density of 30% or more can be observed.

In addition, in the copper alloy particle 50 of the copper alloy powder for the metal AM of the present embodiment, it is preferable that the CrSiNi-containing layer 52 on the particle surface of the copper alloy powder for the metal AM contains oxygen.

That is, it is preferable that the copper alloy particle 50 of the copper alloy powder for the metal AM of the present embodiment includes, as shown in FIG. 1, the particle main body 51 consisting of the copper alloy containing Cr, Si, and Ni, and the CrSiNi-containing layer 52 formed on the outer peripheral surface of the particle main body 51, and the CrSiNi-containing layer 52 contains oxygen.

In addition, it is preferable that the copper alloy constituting the copper alloy particle 50 of the copper alloy powder for the metal AM of the present embodiment has a composition containing, as alloy elements, Cr in a range of 0.1 mass% or more and 0.8 mass% or less, Si in a range of 0.4 mass% or more and 0.8 mass% or less, Ni in a range of 1.8 mass% or more and 3.0 mass% or less, and a balance consisting of copper and impurities. That is, the copper alloy constituting the copper alloy particle 50 of the copper alloy powder for the metal AM of the present embodiment has a composition corresponding to C18000.

In the present embodiment, the alloy element refers to Cr, Si, and Ni. In addition, here, the impurities are components containing impurity elements which will be described below, O, H, S, and N.

In a composition of the copper alloy constituting the copper alloy particle 50 of the copper alloy powder for the metal AM, an error of the accuracy of the concentrations is ±10% (excluding O, H, S, and N).

The lower limit of the amount of Cr is more preferably 0.2 mass% or more, and even more preferably 0.3 mass% or more. The upper limit of the amount of Cr is more preferably 0.8 mass% or less, and even more preferably 0.7 mass% or less.

The lower limit of the amount of Si is more preferably 0.45 mass% or more, and even more preferably 0.5 mass% or more. The upper limit of the amount of Si is more preferably 0.7 mass% or less, and even more preferably 0.6 mass% or less.

The lower limit of the amount of Ni is more preferably 1.9 mass% or more, and even more preferably 2.0 mass% or more. The upper limit of the amount of Ni is more preferably 2.9 mass% or less, and even more preferably 2.8 mass% or less.

In addition, the copper alloy constituting the copper alloy particle 50 of the copper alloy powder for the metal AM may contain an additive element other than the alloy element and an impurity element (excluding O, H, S, and N).

In the present embodiment, the additive element is an element intentionally added to the copper alloy powder for the metal AM of the present embodiment. Meanwhile, the impurity element (excluding O, H, S, and N) is an element that is unintentionally mixed in the copper alloy powder for the metal AM of the present embodiment, and is derived from impurities contained in contamination or a raw material in a small amount during a manufacturing step. The impurity element may be inevitable impurities.

As the additive element other than the alloy element and the impurity element (excluding O, H, S, and N) in the alloy corresponding to C18000 constituting the copper alloy particle 50 of the copper alloy powder for the metal AM, Zr, Mg, Ti, Al, Zn, Ca, Sn, Pb, Fe, Mn, Te, Nb, P, Co, Sb, Bi, Ag, Ta, W, Mo, and the like are exemplary examples. Here, the additive element other than the alloy element and the impurity element (excluding O, H, S, and N) may contain at least one element selected from a group consisting of Zr, Mg, Ti, Al, Zn, Ca, Sn, Pb, Fe, Mn, Te, Nb, P, Co, Sb, Bi, Ag, Ta, W, Mo, and the like.

The total amount of the additive element other than the alloy element and the impurity element (excluding O, H, S, and N) in the alloy corresponding to C18000 constituting the copper alloy particle 50 of the copper alloy powder for the metal AM may be 0.07 mass% or less, may be 0.06 mass% or less, may be 0.05 mass% or less, and is set to preferably 0.04 mass% or less, more preferably 0.03 mass% or less, even more preferably 0.02 mass% or less, and still more preferably 0.01 mass% or less.

In addition, the upper limit of the amount of each of the additive element other than the alloy element and the impurity element (excluding O, H, S, and N) in the alloy corresponding to C18000 constituting the copper alloy particle 50 of the copper alloy powder for the metal AM is set to preferably 30 mass ppm or less, more preferably 20 mass ppm or less, and even more preferably 15 mass ppm or less.

In the copper alloy powder for the metal AM of the present embodiment, it is preferable that a 50% cumulative particle diameter D50 based on the volume measured by a laser diffraction and scattering method is set to be in a range of 5 µm or more and 120 µm or less, a 10% cumulative particle diameter D10 is set to be in a range of 1 µm or more and 80 µm or less, and a 90% cumulative particle diameter D90 is set to be in a range of 10 µm or more and 150 µm or less.

The lower limit of the 50% cumulative particle diameter D50 is more preferably 10 µm or more and even more preferably 15 µm or more. The upper limit of the 50% cumulative particle diameter D50 is more preferably 100 µm or less and even more preferably 90 µm or less.

In addition, the lower limit of the 10% cumulative particle diameter D10 is more preferably 5 µm or more and even more preferably 10 µm or more. The upper limit of the 10% cumulative particle diameter D10 is more preferably 70 µm or less and even more preferably 60 µm or less.

In addition, the lower limit of the 90% cumulative particle diameter D90 is more preferably 20 µm or more and even more preferably 30 µm or more. The upper limit of the 90% cumulative particle diameter D90 is more preferably 140 µm or less and even more preferably 120 µm or less.

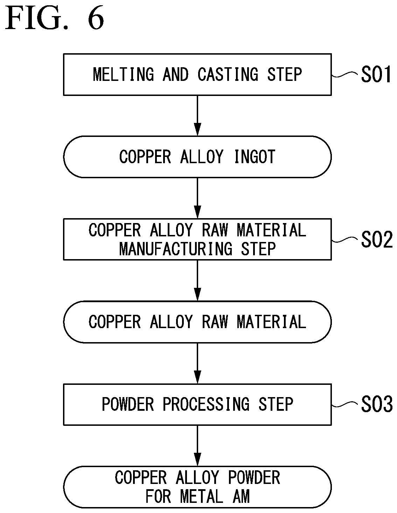

An example of a method for manufacturing the copper alloy powder for the metal AM of the present embodiment will be described with reference to a flowchart of FIG. 6. In the present embodiment, a copper alloy powder suitable for the laser PBF method is manufactured.

The method for manufacturing the copper alloy powder for the metal AM of the present embodiment includes a melting and casting step S01 of obtaining a copper alloy ingot, a copper alloy raw material manufacturing step S02 of processing the obtained copper alloy ingot to a linear rod material to obtain a copper alloy raw material, and a powder processing step S03 of processing the copper alloy raw material to a powder.

### (Melting and casting step S01)

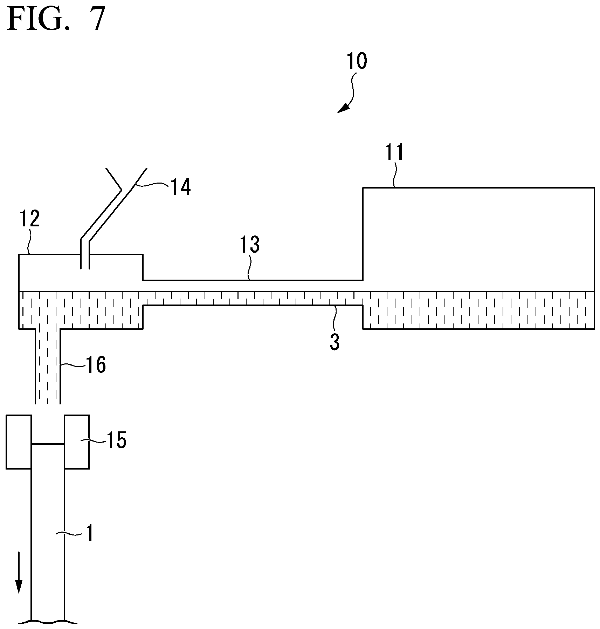

First, a copper alloy ingot having a predetermined composition is manufactured. Here, in the present embodiment, a copper alloy ingot 1 is manufactured by using a continuous casting apparatus 10 shown in FIG. 7.

The continuous casting apparatus 10 includes a melting furnace 11, a tundish 12 disposed downstream of the melting furnace 11, a connecting pipe 13 which connects the melting furnace 11 and the tundish 12, an addition unit 14 which adds an alloy element to the tundish 12, a continuous casting mold 15 disposed on a downstream side of the tundish 12, and a pouring nozzle 16 which pours a molten copper alloy from the tundish 12 into the continuous casting mold 15.

In the melting furnace 11, the copper raw material is melted in a non-oxidizing atmosphere (an inert gas atmosphere or a reducing atmosphere) to obtain molten copper 3.

Here, the copper raw material melted in the melting furnace 11 is high-purity copper having a purity of copper of 99.99 mass% or more (for example, high-purity electrolytic copper or oxygen-free copper). The copper raw material to be melted is high-purity copper with 4N (99.99 mass%) or more, however, is more preferably high-purity copper with 5N (99.999 mass%) or more, and even more preferably high-purity copper with 6N (99.9999 mass%) or more. In addition, the obtained molten copper 3 is preferably molten oxygen-free copper.

In the connecting pipe 13, the obtained molten copper 3 is supplied to the tundish 12 in a state where the non-oxidizing atmosphere (the inert gas atmosphere or the reducing atmosphere) is maintained.

In addition, in the tundish 12, the molten copper 3 is held in the non-oxidizing atmosphere (the inert gas atmosphere or the reducing atmosphere).

Since the melting furnace 11, the connecting pipe 13, and the tundish 12 are in the non-oxidizing atmosphere (the inert gas atmosphere or the reducing atmosphere), gas components (O and H) in the molten copper 3 are reduced.

In the tundish 12, an alloy element (Cr, Si, Ni, and the like) is suitably added to the held molten copper 3 using the addition unit 14. In addition, an additive element may be suitably added here.

By adding the alloy element to the molten copper 3, in which the gas component (O and H) is sufficiently reduced, an addition yield of the alloy element is excellent. Accordingly, it is possible to reduce the amount of the alloy element used, and reduce a manufacturing cost of the copper alloy.

In addition, by adding the alloy element to the molten copper 3 flowing the inside of the tundish 12, the alloy element is uniformly melted, and it is possible to continuously manufacture a molten copper alloy having a stable component value.

The obtained molten copper alloy is poured into the continuous casting mold 15 through the pouring nozzle 16, thereby continuously manufacturing the copper alloy ingot 1.

In the present embodiment, a copper alloy ingot having a circular cross section is manufactured.

Here, in the present embodiment, in the obtained copper alloy ingot 1, the O concentration is set to 10 mass ppm or less and the H concentration is set to 5 mass ppm or less.

In the obtained copper alloy ingot 1, an S concentration is preferably set to 15 mass ppm or less.

In addition, in the obtained copper alloy ingot 1, the total amount of the impurity element other than Cu is preferably 0.04 mass% or less.

### (Copper alloy raw material manufacturing step S02)

Next, the copper alloy ingot obtained in the melting and casting step S01 is processed into a linear rod material to manufacture a copper alloy raw material. The copper alloy raw material manufacturing step S02 includes an extrusion step, a drawing step, and a cutting step.

In the copper alloy raw material manufacturing step S02, first, the copper alloy ingot having a circular cross section is heated and subjected to hot extrusion processing to form a rod material having a predetermined diameter (the extrusion step).

In the present embodiment, a heating temperature during the hot extrusion processing is preferably set to be in a range of 700°C or higher and 1,000°C or lower.

Next, the obtained rod material is subjected to drawing processing to obtain a wire rod having predetermined diameter (the drawing step). A temperature of the drawing processing is not particularly limited, however, is preferably set to be in a range of -200°C to 200°C, at which cold or warm rolling is performed, and particularly preferably room temperature.

The obtained wire rod is cut to have a predetermined length to obtain a copper alloy raw material (the cutting step).

Here, the O concentration of the obtained copper alloy raw material is preferably 10 mass ppm or less and the H concentration thereof is preferably 5 mass ppm or less.

In addition, an S concentration of the obtained copper alloy raw material is preferably 15 mass ppm or less.

In addition, the total amount of the impurity element (excluding O, H, and S) other than Cu and the alloy elements in the obtained copper alloy raw material is preferably 0.04 mass% or less.

### (Powder processing step S03)

Next, an atomizing treatment is performed using the copper alloy raw material obtained in the copper alloy raw material manufacturing step S02 to manufacturing a copper alloy powder for the metal AM.

This powder processing step S03 includes a melting step, an atomizing treatment step, and a classification step.

In this melting step, the copper alloy raw material is heated and melted to obtain a molten alloy. Here, in the present embodiment, an atmosphere at the time of melting is preferably a non-oxidizing atmosphere.

In the atomizing treatment step, a powder is obtained by, for example, a gas atomizing method. That is, the molten alloy obtained in the melting step is sprayed with a high-pressure gas and liquid droplets of the molten alloy are rapidly cooled to manufacture a powder having a spherical shape or a shape similar to the spherical shape. In the classification step, the obtained powder is subjected to a classification treatment to obtain a copper alloy powder having a predetermined particle size distribution. As a gas used in the gas atomizing method, an inert gas such as argon or nitrogen can be used. A melting temperature of the copper alloy raw material in the gas atomizing treatment (the melting temperature during the gas atomizing treatment) is preferably a melting point of copper or higher and 1,500°C or lower. The melting temperature during the gas atomizing treatment may be 1,085°C or higher and 1,500°C or lower.

Here, in the present embodiment, as described above, since the atomizing treatment is performed using the molten alloy derived from the copper alloy raw material, in which the amount of the impurity element (excluding O, H, S, and N) is sufficiently reduced, Cr or Si is suppressed from being consumed by reacting with the impurity element (excluding O, H, S, and N), and the CrSi-based compound containing Cr and Si and the NiSi-based compound containing Ni and Si can be precipitated on at least the copper crystal grain boundary of the particle surface of the copper alloy powder for the metal AM.

In addition, in the present embodiment, since the atomizing treatment is performed using the molten alloy derived from the copper alloy raw material, in which the amount of the impurity (a component containing the impurity element and O, H, S, and N) is sufficiently reduced, Cr or Si is suppressed from being consumed by reacting with the impurity (the component containing the impurity element and O, H, S, and N), and the CrSi-based compound containing Cr and Si and the NiSi-based compound containing Ni and Si can be precipitated on at least the copper crystal grain boundary of the particle surface of the copper alloy powder for the metal AM.

By each step described above, the copper alloy powder for the metal AM of the present embodiment is manufactured. In the copper alloy powder for the metal AM of the present embodiment, the O concentration is preferably 1,000 mass ppm or less and the H concentration is preferably 5 mass ppm or less.

Specifically, the O concentration may be approximately 2,700 mass ppm or less, and is preferably 1,000 mass ppm or less and more preferably 900 mass ppm or less. In addition, the lower limit of the O concentration is not particularly limited, however, may be a value not including 0 (or a value more than 0).

When the O concentration is high, foreign materials remain in a formed body in the form of oxygen, oxide, or the like, which may deteriorate various properties of the formed body.

The H concentration may be 90 mass ppm, may be 60 mass ppm or less, or is preferably 5 mass ppm or less. In addition, the lower limit of the H concentration is not particularly limited, however, may be a value not including 0 (or a value more than 0).

In addition, the S concentration of the copper alloy powder for the metal AM may be 90 mass ppm or less, may be 60 mass ppm or less, and is preferably 30 mass ppm or less. Furthermore, the S concentration of the copper alloy powder for the metal AM is more preferably 10 mass ppm or less. In addition, the lower limit of the S concentration is not particularly limited, however, may be a value not including 0 (or a value more than 0).

Furthermore, in a step performed under a finite pressure, such as the atomizing treatment or the like, the powder may include an atmosphere component due to an atmosphere component included in an atmosphere or in the step. For example, the powder may contain nitrogen derived from the atmosphere component. In the copper alloy powder for the metal AM, the nitrogen concentration (the N concentration) is desirably 30 mass ppm, more desirably 20 mass ppm, and even more desirably 10 mass ppm or less. In addition, in the copper alloy powder for the metal AM of the present embodiment, the nitrogen concentration (the N concentration) is desirably 30 mass ppm, more desirably 20 mass ppm, may be 10 mass ppm or less, and even more desirably 5 mass ppm or less. In addition, the lower limit of the N concentration is not particularly limited, however, may be a value not including 0 (or a value more than 0).

The copper alloy powder for the metal AM may contain the additive element other than the alloy element and impurity element in a range that does not affect the properties.

Here, the total amount of the additive element and the impurity element (excluding O, H, S, and N) may be 0.07 mass% or less, may be 0.06 mass% or less, may be 0.05 mass% or less, and is set to preferably 0.04 mass% or less, more preferably 0.03 mass% or less, even more preferably 0.02 mass% or less, and still more preferably 0.01 mass% or less.

In addition, the upper limit of the amount of each of the additive element and the impurity element (excluding O, H, S, and N) is set to preferably 30 mass ppm or less, more preferably 20 mass ppm or less, and even more preferably 15 mass ppm or less.

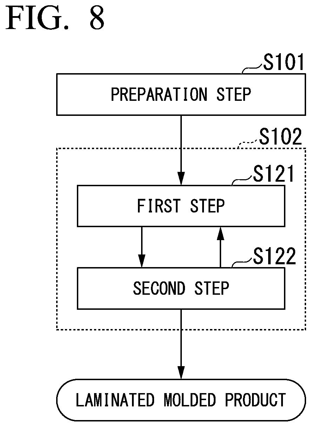

Next, a method for manufacturing an additive manufacturing product of the present embodiment will be described with reference to a flowchart of FIG. 8.

The method for manufacturing an additive manufacturing product of the present embodiment includes a preparation step S101 of preparing the copper alloy powder for the metal AM, a forming step S102 of manufacturing the additive manufacturing product by sequentially repeating a first step S121 of forming a powder bed including the copper alloy powder for the metal AM and a second step S122 of forming a solidified bed by solidifying the copper alloy powder for the metal AM at a predetermined position in the powder bed.

By performing such steps, an additive manufacturing product having a predetermined shape is manufactured. Since the copper alloy powder for the metal AM of the present embodiment is used, this additive manufacturing product has excellent mechanical characteristics with less structural defects such as voids and the like.

The copper alloy powder for the metal AM of the present embodiment configured as described above is configured with the copper alloy particle containing Cr, Si, and Ni, and any one or both of the CrSi-based compound containing Cr and Si and the NiSi-based compound containing Ni and Si are precipitated on the copper crystal grain boundary of the particle surface of the copper alloy powder for the metal AM. Accordingly, the reproducibility of a microstructure of a formed body manufactured by the metal AM is high, and it is possible to stably manufacture a high-quality additive manufacturing product with less structural defects such as voids and the like.

In the copper alloy powder for the metal AM of the present embodiment, in a case where any one or both of the CrSi-based compound containing Cr and Si and the NiSi-based compound containing Ni and Si are also precipitated on the copper crystal grain of the surface of the copper alloy particle constituting the copper alloy powder for the metal AM, the reproducibility of a microstructure of a formed body manufactured by the metal AM is higher, and it is possible to further stably manufacture a high-quality additive manufacturing product with less structural defects such as voids and the like.

In the copper alloy powder for the metal AM of the present embodiment, the CrSiNi-containing layer 52 containing any one or both of the CrSi-based compound and the NiSi-based compound are formed on the particle surface of the copper alloy powder for the metal AM. Accordingly, the reproducibility of a microstructure of a formed body manufactured by the metal AM is higher, and it is possible to further stably manufacture a high-quality additive manufacturing product with less structural defects such as voids and the like.

In addition, in the copper alloy powder for the metal AM of the present embodiment, in a case where the CrSiNi-containing layer 52 formed on the particle surface of the copper alloy powder for the metal AM contains oxygen, alteration of the copper alloy powder for the metal AM can be suppressed, the reproducibility of a microstructure of a formed body manufactured by the metal AM is high, and it is possible to stably manufacture a higher-quality additive manufacturing product with less structural defects such as voids and the like.

In addition, in the copper alloy powder for the metal AM of the present embodiment, in a case where the copper alloy constituting the copper alloy powder for the metal AM has a composition containing Cr in a range of 0.1 mass% or more and 0.8 mass% or less, Si in a range of 0.4 mass% or more and 0.8 mass% or less, Ni in a range of 1.8 mass% or more and 3.0 mass% or less, and a balance consisting of copper and impurities, by performing a suitable heat treatment with respect to an additive manufacturing product manufactured using this copper alloy powder for the metal AM, a compound can be precipitated, and it is possible to manufacture an additive manufacturing product having excellent electrical conductivity, heat conductivity, and intensity.

In addition, in the copper alloy powder for the metal AM of the present embodiment, in a case where the 50% cumulative particle diameter D50 based on the volume measured by the laser diffraction and scattering method is set to be in a range of 5 µm or more and 120 µm or less, a particle size distribution is suitable for the metal AM, and it is possible to stably manufacture an additive manufacturing.

In addition, in the copper alloy powder for the metal AM of the present embodiment, in a case where the 10% cumulative particle diameter D10 based on the volume measured by the laser diffraction and scattering method is set to be in a range of 1 µm or more and 80 µm or less, a particle size distribution is suitable for the metal AM, and it is possible to stably manufacture an additive manufacturing.

In addition, in the copper alloy powder for the metal AM of the present embodiment, in a case where the 90% cumulative particle diameter D90 based on the volume measured by the laser diffraction and scattering method is set to be in a range of 10 µm or more and 150 µm or less, a particle size distribution is suitable for the metal AM, and it is possible to stably manufacture an additive manufacturing product.

In the method for manufacturing the additive manufacturing product of the present embodiment, the copper alloy powder for the metal AM of the present embodiment is used. Accordingly, the reproducibility of a microstructure of a formed body manufactured by the metal AM is high, and it is possible to stably manufacture a high-quality additive manufacturing product with less structural defects such as voids and the like.

Hereinabove, the copper alloy powder for the metal AM and the method for manufacturing the additive manufacturing product of the embodiment of the present invention have been described, but the present invention is not limited thereto, and modifications can be suitably performed within a range not departing from the technical ideas of the invention.

For example, in the embodiment described above, it has been described that the copper alloy powder for the metal AM is manufactured by the gas atomizing method, but the invention is not limited thereto, and the copper alloy powder for the metal AM may be manufactured by a water atomizing method, a centrifugal force atomizing method, a plasma atomizing method, or the like.

In addition, the copper alloy powder for the metal AM obtained as described above may be suitably subjected to a heat treatment by controlling the atmosphere to stabilize the structure and the like.

Furthermore, in the present embodiment, it has been described that the copper alloy powder for the metal AM suitable for the PBF method using laser is manufactured, but the invention is not limited thereto, and it may be a copper alloy powder for the metal AM suitable for other metal AM.

In addition, after the forming step S102, the heat treatment step of performing a heat treatment at a temperature of 300°C or higher and a melting point of pure copper or lower may be performed. In addition, after the forming step S102, a first heat treatment step of performing a heat treatment in a temperature range of 800°C or higher and a melting point of pure copper or lower, and a second heat treatment step of performing a heat treatment in a temperature range of 300°C or higher and 800°C or lower after the first heat treatment step may be performed.

In addition, in the present embodiment, it has been described that the copper alloy ingot is manufactured using the continuous casting apparatus shown in FIG. 7, but the invention is not limited thereto, and other casting apparatuses may be used.

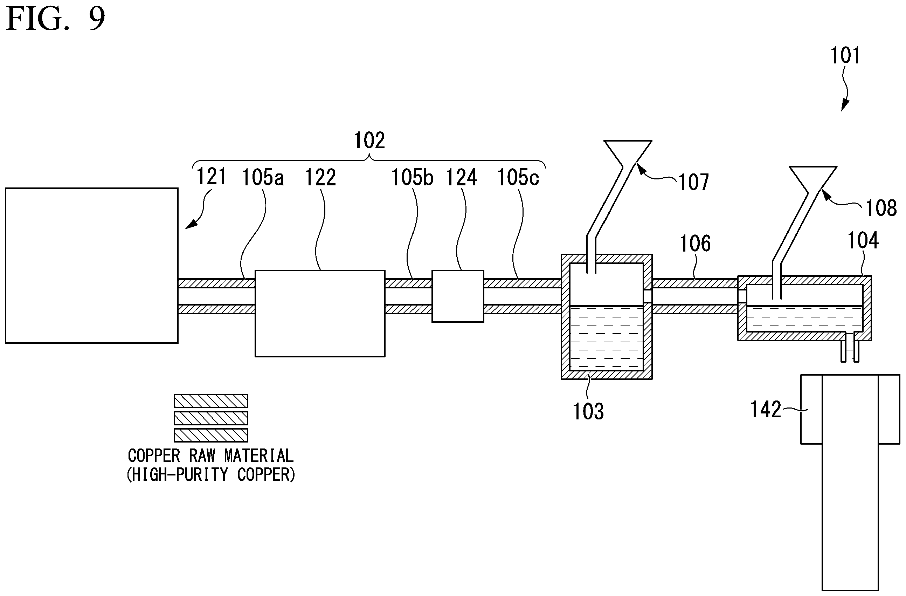

For example, a continuous casting apparatus 101 shown in FIG. 9 may be used. The continuous casting apparatus 101 includes an oxygen-free copper supply means 102 disposed at an uppermost stream portion, a heating furnace 103 disposed downstream thereof, a tundish 104, which is disposed downstream of the heating furnace 103, molten metal supply paths 105a, 105b, and 105c connecting the oxygen-free supply means 102 and the heating furnace 103, a pipe 106 connecting the heating furnace 103 and the tundish 104, an addition means 107 and 108 for adding the alloy element, and a continuous casting mold 142.

The oxygen-free copper supply means 102 is configured with a melting furnace 121 for melting a copper raw material, a holding furnace 122 for temporarily holding molten copper obtained by being melted in the melting furnace 121, a degassing treatment device 124 for removing oxygen and hydrogen in the molten copper, and the molten metal supply paths 105a, 105b, and 105c connecting these.

The degassing treatment device 124 includes a gas bubbling device as a stirring means such that the molten copper is stirred in the inside thereof, and, for example, bubbling or the like due to an inert gas is performed, to remove oxygen and hydrogen from the molten copper.

The inside of the molten metal supply paths 105a, 105b, and 105c is set to the non-oxidizing atmosphere in order to prevent the molten copper and the molten oxygen-free copper from being oxidized. The non-oxidizing atmosphere is formed, for example, by blowing an inert gas such as a mixed gas of nitrogen and carbon monoxide or argon into the molten metal supply paths.

The addition means for adding an alloy element includes a first addition means 107 disposed in the heating furnace 103 and a second addition means 108 disposed in the tundish 104.

When the alloy element is continuously or intermittently charged from the first addition means 107 provided in the heating furnace 103, the alloy element is added into the molten oxygen-free copper stored in the heating furnace 103. Here, the molten oxygen-free copper stored in a storage unit is heated by a high-frequency induction coil, and melting of the added alloy element is promoted.

In addition, when the alloy element is continuously or intermittently charged from the second addition means 108 provided in the tundish 104, the alloy element is added into the molten oxygen-free copper flowing in the tundish 104. Here, since the molten oxygen-free copper flowing in the tundish 104 is heated in the heating furnace 103 to have a high temperature and flows in the tundish 104, the melting of the added alloying element is promoted.

### Examples

Hereinafter, results of experiments for confirmation performed to confirm the effects of the present invention will be described.

First, a copper alloy ingot of C18000 having a composition shown in Table 1 was manufactured using a copper raw material consisting of high-purity copper of 4N grade by the manufacturing method described in the embodiment.

Next, by using the manufactured copper alloy ingot of C18000 composition as a raw material, a copper alloy powder for the metal AM having the C18000 composition shown in Table 2 was manufactured by a gas atomizing method using an argon gas, and classified by a particle size suitable for a powder bed of laser PBF. A melting temperature during the gas atomizing treatment was performed under a condition of 1,300°C.

For the obtained copper alloy powder for the metal AM having the C18000 composition, the presence or absence of the CrSi-based compound on the copper crystal grain boundary or the copper crystal grain of the particle surface of the copper alloy particle constituting the copper alloy powder, the presence or absence of the NiSi compound on the copper crystal grain boundary or the copper crystal of the copper particle surface constituting the powder, the presence or absence of oxygen on the particle surface of the copper alloy particle constituting the copper alloy powder, the 10% cumulative particle diameter D10, the 50% cumulative particle diameter D50, the 90% cumulative particle diameter D90 based on volume, and the composition were evaluated.

### (Presence or absence of CrSi-based compound on copper crystal grain boundary or copper crystal grain of copper alloy particle)

By Auger electron spectroscopy, in the copper alloy powder for the metal AM of an example of the present invention, the presence or absence of the CrSi-based compound on the copper crystal grain boundary and the copper crystal grain on the surface of the copper alloy particle constituting the powder and on the copper crystal grain boundary and the copper crystal grain in the copper alloy particle was confirmed. Observation results were obtained as shown in FIGS. 2A to 2E.

### (Presence or absence of NiSi-based compound on copper crystal grain boundary or copper crystal grain of copper alloy particle)

By Auger electron spectroscopy, in the copper alloy powder for the metal AM of an example of the present invention, the presence or absence of the NiSi-based compound on the copper crystal grain boundary and the copper crystal grain (copper crystal grain surface) on the surface of the copper alloy particle constituting the powder and on the copper crystal grain boundary and the copper crystal grain in the powder was confirmed. Observation results were obtained as shown in FIGS. 2A to 2E.

### (Presence or absence of oxygen on surface of copper alloy particle constituting powder)

The presence or absence of oxygen on the particle surface was confirmed by Auger electron spectroscopy.

### (Presence or absence of CrSi-based compound and NiSi-based compound on surface of copper alloy particle)

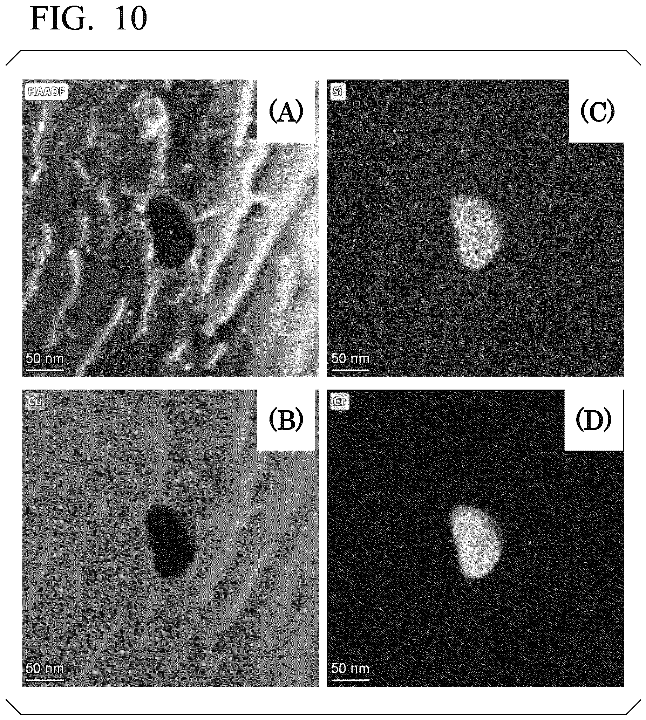

By high-angle annular dark-field scanning transmission microscopy, the presence or absence of the CrSi-based compound and the NiSi-based compound on the particle surface of the copper alloy constituting the powder was confirmed in the copper alloy powder for the metal AM of the example of the present invention. Analysis results were obtained as shown in FIGS. 10 and 11.

### (Volume average particle diameter of copper alloy powder)

A particle diameter distribution was measured by a wet process using MT3300EXII manufactured by Microtrac Co., Ltd., and a 10% cumulative particle diameter D10, a 50% cumulative particle diameter D50, and a 90% cumulative particle diameter D90 based on volume were calculated from the obtained results. As a result of measuring the particle diameter distribution of the copper alloy powder for the metal AM after the classification of the example of the present invention by the present method, D10 based on volume was 15 µm, D50 was 27 µm, and D90 was 45 µm.

### (Composition of ingot and copper alloy powder for the metal AM)

the O concentration in the ingot shown in Table 1 and the copper alloy powder for the metal AM of the example of the present invention was obtained by an inert gas melting-infrared absorption method, the H concentration was obtained by an inert gas melting-heat conductivity method, and the S concentration was obtained by combustion-infrared absorption method. In addition, concentrations of components other than these substances excluding copper were obtained by combining fluorescent X-ray spectrometry, glow discharge mass spectrometry, and inductively coupled plasma mass spectrometry.

### (Additive manufacturing)

A small piece of an additive manufacturing product was manufactured using the copper alloy powder for the metal AM of the example of the present invention under a condition of an energy density of 13 J/mm² by using a commercially available laser PBF apparatus. A density of the additive manufacturing product was measured.

In addition, the obtained additive manufacturing product was subjected to a heat treatment under conditions shown in Table 3, and mechanical characteristics and electrical characteristics of the additive manufacturing product after the heat treatment were evaluated.

### (Density)

A density of the additive manufacturing product was evaluated from a cross section of the manufactured additive manufacturing product, and an area occupied by voids observed on the cross-section of the additive manufacturing product. In the present specification, this density is defined as a density of the additive manufacturing product.

In the evaluation of the density of the additive manufacturing product, a cross-sectional area to be measured is defined in the cross section of the additive manufacturing product (this is referred to as an evaluation cross-sectional area, which is 3.4mm square), portions of voids inside the measurement cross-sectional area were confirmed, and an occupied area of the voids in the evaluation cross-sectional area was calculated. (Evaluation cross-sectional area - void occupied area)/evaluation cross-sectional area was defined as the density of the additive manufacturing product. An evaluation result of the density of the additive manufacturing product is shown in Table 2.

### (Evaluation of mechanical characteristics and electrical conductivity of additive manufacturing product)

As the mechanical characteristics of the manufactured additive manufacturing product, a Vickers hardness (HV unit) at room temperature was measured based on JIS Z 2244: 2009. A load for measuring the Vickers hardness was set to 10 kgf. In addition, an electrical conductivity in a %IACS unit of the manufactured additive manufacturing product was measured at room temperature by eddy current conductivity measurementt.

**[Table 1]**

| | Component composition (mass ratio) | | | | | | | |
|---|---|---|---|---|---|---|---|---|
| | Cu | Cr (%) | Ni (%) | Si (%) | O (ppm) | H (ppm) | S (ppm) | Impurities (%) |
| C18000 ingot | Balance | 0.4 | 2.6 | 0.5 | < 10 | < 5 | < 10 | < 0.02 |

| | | | | | | | | |
|---|---|---|---|---|---|---|---|---|
| (Impurities shown in Table 1 exclude O, H, and S from the impurities.) | | | | | | | | |

**[Table 2]**

| | Component composition (mass ratio) | | | | | | | | Additive manufacturing product |
|---|---|---|---|---|---|---|---|---|---|
| | Cu | Cr (%) | Ni (%) | Si (%) | O (ppm) | H (ppm) | S (ppm) | Impurities (%) | Density (%) |
| Example of present invention | Balance | 0.4 | 2.6 | 0.5 | 100 | < 10 | < 10 | < 0.02 | 99.3 |

| | | | | | | | | | |
|---|---|---|---|---|---|---|---|---|---|
| (Impurities shown in Table 2 exclude O, H, S, and N from the impurities.) | | | | | | | | | |

**[Table 3]**

| | First heat treatment conditions | | Second heat treatment conditions | | Characteristics | |
|---|---|---|---|---|---|---|
| | Heating temperature (°C) | Holding time (min) | Heating temperature (°C) | Holding time (hour) | Vickers hardness (HV) | Electrical conductivity (%IACS) |
| Example of present invention | 950 | 15 | 420 | 2.2 | 194 | 40 |

FIGS. 2A to 2E show the results of the Auger electron spectroscopy after performing ion etching on the particle surface of the copper alloy powder for the metal AM of the present invention for 15 minutes. Although an etching rate of each constituent element alone or compound generated by each constituent element on the particle surface of the copper alloy powder of the present invention in an experimental system of the present Auger electron spectroscopy is not clear, since an etching rate of SiO₂ in the experimental system of the present Auger electron spectroscopy is 1.08 nm/min, it is considered that the ion etching for 15 minutes is a structure after performing etching a thickness of approximately 15 nm.

As shown in FIGS. 2A to 2E, on the particle surface after ion etching, a large number of island-shaped microstructures were generated in addition to a copper crystal grain, and a copper crystal grain boundary. First, from the secondary electron image of FIG. 2A, on the surface of the copper alloy particle of the copper alloy powder for the metal AM of the present invention, a grain boundary of the copper crystal grain and a surface of the copper crystal grain (on the copper crystal grain) were confirmed. In addition, referring to FIG. 2B, it was confirmed that the island-shaped microstructures present on the grain boundary of the copper crystal grain and the surface of the copper crystal grain were derived from the Cr-based precipitate.

From the results shown in FIGS. 2B to 2E, it was confirmed that the CrSi-based compound and the NiSi-based compound were precipitated on the copper crystal grain boundary of the particle surface. In addition, from the results shown in FIGS. 2B to 2E, it was confirmed that the CrSi-based compound was dominantly precipitated on the particle surface of the copper alloy powder for the metal AM of the present invention, and was widely distributed on the copper crystal grain boundary and on the copper crystal grain. It is considered that the Cr-based precipitate widely distributed on the particle surface of the copper alloy powder for the metal AM of the present invention contributes to the improvement of laser absorption on the particle surface in the forming process of the metal AM. In addition, by applying the copper alloy powder for the metal AM of the present invention having such a microstructure to the metal AM, it is possible to manufacture an additive manufacturing product of a copper alloy having excellent electrical conductivity, heat conductivity, and intensity.

The density of precipitates derived from the CrSi-based compound and/or the NiSi-based compound in the CrSiNi-containing layer 52 of the particle of the copper alloy powder for the metal AM of the example of the present invention was obtained by calculating an area occupancy rate of the CrSi-based compound and/or each NiSi-based compound from a size and a number of precipitates of the CrSi-based compound and/or the NiSi-based compound per 1 µm² using an image obtained by analyzing the outermost surface of the CrSiNi-containing layer 52 by Auger electron spectroscopy using a scanning Auger electron spectroscopy analysis apparatus PHI700xi manufactured by ULVAC-PHI, INCORPORATED.

On the outermost surface of the CrSiNi-containing layer 52 of the particle of the copper alloy powder for the metal AM of the example of the present invention, a portion where the density of the precipitate is the area ratio of 17%, and a portion where the density of the precipitate is the area ratio of 21% were observed (see FIGS. 2A and 2B).

The copper crystal grain boundary of the image obtained by analyzing the outermost surface of the CrSiNi-containing layer 52 of the particle of the copper alloy powder for the metal AM of the example of the present invention by Auger electron spectroscopy using a scanning Auger electron spectroscopy analysis apparatus PHI700xi manufactured by ULVAC-PHI, INCORPORATED, was observed, and the line density per grain boundary length of 1 µm was obtained from a proportion of the precipitate derived from the CrSi-based compound and/or each NiSi-based compound occupying the grain boundary length of 1 µm. In the CrSiNi-containing layer 52 of the particle of the copper alloy powder for the metal AM of the example of the present invention, a portion where the line density was 31% and a portion where the line density was 60% were observed.

As shown in FIG. 10, from the analysis results of the surface of the copper alloy particle of the copper alloy powder for the metal AM of the present invention with high-angle annular dark-field scanning transmission microscopy, it was confirmed that the CrSi-based compound formed on the surface of the copper alloy particle of the copper alloy powder for the metal AM of the present invention contains Cr₃Si. In addition, as shown in FIG. 11, from analysis of an electron diffraction pattern, it was confirmed that, in a case of FIG. 10, Cr₃Si was formed in a lattice-matched manner to a Cu crystal.

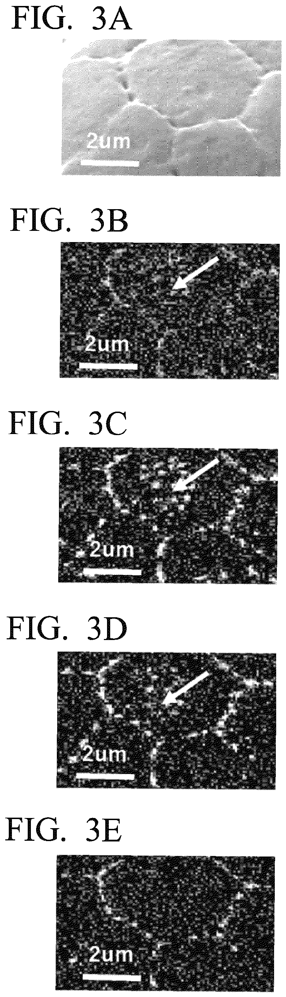

FIGS. 3A to 3F are analysis results obtained by Auger electron spectroscopy of the particle surface of the copper alloy particle constituting the copper alloy powder for the metal AM of the present embodiment, and are Cr mapping images of the particle surface before ion etching, after performing ion etching for 5 minutes, 15 minutes, 30 minutes, and 50 minutes. First, as shown in FIGS. 3A and 3B, it is found that, on the particle outermost surface before ion etching, the Cr-based precipitate is distributed on the copper crystal grain boundary and on the copper crystal grain (copper crystal grain surface) in an island shape. This result coincides with tendency of the results of FIGS. 2B to 2E described above. From the results of FIGS. 2B to 2E, 3A, and 3B, it is considered that the distribution of Cr confirmed in FIGS. 3A and 3B is derived from the CrSi-based compound.

That is, from the results of FIGS. 2B to 2E, 3A, and 3B, it is confirmed that the CrSi-based compound is distributed on the particle surface of the copper alloy powder for the metal AM of the present invention.

In addition, as shown in FIGS. 3B to 3F, a structural change of the island-shaped microstructure on the particle surface was confirmed with the time of ion etching. As shown in FIG. 3F, the distribution of the Cr-based precipitate is confirmed even after the ion etching for 50 minutes, however, compared to FIGS. 3C and 3D, it is confirmed that the number of portions of distribution of Cr tends to decrease. From the results of FIGS. 2B to 2E and 3B to 3F, it was confirmed that the CrSiNi-containing layer 52 containing any one or both of the CrSi-based compound and the NiSi-based compound were formed on the particle surface of the copper alloy powder for the metal AM of the present invention. In addition, it is considered that the thickness of the CrSiNi-containing layer 52 is in a range of approximately 1 nm to 100 nm from the etching rate of SiO₂ in an experimental system of the present Auger electron spectroscopy analysis and the state of the structural change of the particle surface with the etching time of FIGS. 3B to 3F.

From the intensity depth profile of oxygen on the particle surface of the copper alloy powder for the metal AM of the example of the present invention shown in FIG. 4, it was confirmed that the oxygen concentration on the side of the particle outermost surface is high, and the oxygen concentration decreases toward the inside of the particle. Essentially, since the copper alloy powder for the metal AM of the present invention contains oxygen as the copper alloy, a certain amount of oxygen is present in the particle main body, and it is considered that this constitutes a background concentration of the oxygen concentration in the particle main body. On the other hand, the gradient of the oxygen concentration observed on the particle surface is generated mainly in the step of powdering, and furthermore, is considered to be present in a range of approximately 1 nm to 100 nm from the results in FIG. 4, and it is considered that the gradient of the oxygen concentration can be generated in the order of the thickness of the surface layer containing the Cr-based precipitate.

From the results of FIGS. 2B to 2E, 3B to 3F, and 4, it was confirmed that the CrSiNi-containing layer on the particle surface of the copper alloy powder for the metal AM of the present invention was a layer containing oxygen. It is considered that the presence of such a layer containing oxygen in the copper alloy powder for the metal AM of the example of the present invention has an effect of suppressing alteration of the surface of the copper alloy powder. In addition, as shown in FIGS. 2B to 2E, 3B to 3F, and 4, since Cu, which is a parent phase, is a main component in the copper alloy powder for the metal AM of the example of the present invention, it is presumed that such oxygen is mainly derived from copper oxide, and it is presumed that it is present as a constituent element of oxide of the alloy element and other impurity element. That is, it is presumed that the CrSiNi-containing layer on the surface of the copper alloy powder for the metal AM of the example of the present invention forms a composite layer configured from Cu or a copper oxide, an oxide of Cr, Si, or Ni, and the like, while including a compound configured with Cr, Si, or Ni.

FIGS. 5A to 5D show the results of Auger electron spectroscopy of a particle cross section of the copper alloy powder for the metal AM of the present invention as a cross-sectional observation of the copper alloy particle. As shown in the drawings, the presence of the CrSi-based precipitate and the NiSi-based precipitate was confirmed on the copper crystal grain boundary in the particle, whereas from the result of the present Auger electron spectroscopy, the Cr-based precipitate was not confirmed in the copper crystal grain. The reason for this is predicted to be that there are almost no Cr-based precipitate in the copper crystal grain, or the Cr-based precipitate in the copper crystal grain is very small in size (or small in amount), which is difficult to be observed. Therefore, from the comparison between FIGS. 2B to 2E and FIGS. 5A to 5D, that is, from the comparison between the particle surface and the particle cross section, it was considered that a proportion of the precipitate occupying a certain surface of the particle is greater on the particle outermost surface (or the surface layer) than inside of the particle.

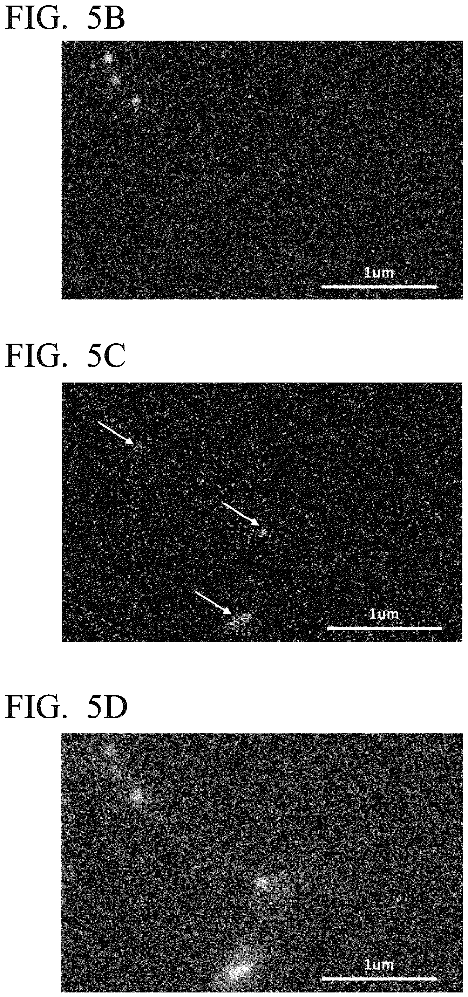

On the other hand, as representatively shown in FIG. 5, the presence of any one or both of the CrSi-based precipitate and the NiSi-based precipitate were confirmed on the grain boundary in the particle of the copper alloy powder for the metal AM. This result indicates that any one or both of the CrSi-based precipitate and the NiSi-based precipitate are present on the grain boundary in the CrNiSi-containing layer on the particle surface of the particle of the copper alloy powder for the metal AM.

Since the particle surface of the copper alloy powder for the metal AM of the present invention has such a characteristic structure, compared to the inside of the particle, the laser absorption is promoted, and an increase of the density of the formed body and the improvement of productivity of the formed body are realized.

As shown in Table 2, in a case where the molding was performed using the copper alloy powder for the metal AM having the C18000 composition of the example of the present invention, in which any one or both of the CrSi-based compound containing Cr and Si and the NiSi-based compound containing Ni and Si were precipitated on the copper crystal grain boundary, the density of the additive manufacturing product was set to 99.3%. In addition, as shown in Table 3, by performing a suitable heat treatment on the additive manufacturing product having the C18000 composition, practical Vickers hardness and electrical conductivity were confirmed.

From these results, it was confirmed that, in the copper alloy powder for the metal AM of the example of the present invention, it is possible to manufacture an additive manufacturing product with less voids, which is important for actual use, and it is possible to realize a practical additive manufacturing product of a copper alloy in which mechanical characteristics and electrical conductivity are confirmed to be sufficient for actual use.

### Reference Signs List

50: Copper alloy particle
51: Particle main body
52: CrSiNi-containing layer

## Claims

1. A copper alloy powder for a metal AM, which is used for the metal AM, the copper alloy powder comprising:
a copper alloy containing Cr, Si, and Ni,
wherein any one or both of a CrSi-based compound containing Cr and Si and a NiSi-based compound containing Ni and Si are precipitated on a copper crystal grain boundary of a surface of a copper alloy particle constituting the copper alloy powder.

2. The copper alloy powder for the metal AM according to Claim 1,
wherein any one or both of the CrSi-based compound and the NiSi-based compound are precipitated on a copper crystal grain of the surface of the copper alloy particle constituting the copper alloy powder.

3. The copper alloy powder for the metal AM according to Claim 1,
wherein a layer containing any one or both of the CrSi-based compound and the NiSi-based compound is formed on the surface of the copper alloy particle.

4. The copper alloy powder for the metal AM according to Claim 3,
wherein the layer containing any one or both of the CrSi-based compound and the NiSi-based compound contains oxygen.

5. The copper alloy powder for the metal AM according to Claim 1,
wherein, in a cross-sectional observation of the copper alloy particle constituting the copper alloy powder, any one or both of the CrSi-based compound and the NiSi-based compound are distributed on the copper crystal grain boundary.

6. The copper alloy powder for the metal AM according to Claim 1,
wherein the copper alloy has a composition containing Cr in a range of 0.1 mass% or more and 0.8 mass% or less, Si in a range of 0.4 mass% or more and 0.8 mass% or less, Ni in a range of 1.8 mass% or more and 3.0 mass% or less, and a balance consisting of copper and impurities.

7. The copper alloy powder for the metal AM according to Claim 2,
wherein the CrSi-based compound contains Cr₃Si.

8. The copper alloy powder for the metal AM according to Claim 2,
wherein the NiSi-based compound contains Ni₅Si₂.

9. The copper alloy powder for the metal AM according to Claim 1,
wherein a 50% cumulative particle diameter D50 based on a volume, which is measured by a laser diffraction and scattering method, is set to be in a range of 5 µm or more and 120 µm or less.

10. The copper alloy powder for the metal AM according to Claim 1,
wherein a 10% cumulative particle diameter D10 based on a volume, which is measured by a laser diffraction and scattering method, is set to be in a range of 1 µm or more and 80 µm or less.

11. The copper alloy powder for the metal AM according to Claim 1,
wherein a 90% cumulative particle diameter D90 based on a volume, which is measured by a laser diffraction and scattering method, is set to be in a range of 10 µm or more and 150 µm or less.

12. A method for manufacturing an additive manufacturing product, the method comprising:
a preparation step of preparing the copper alloy powder for the metal AM according to any one of Claims 1 to 11; and
a forming step of sequentially repeating a first step of forming a powder bed including the copper alloy powder for the metal AM, and a second step of forming a solidified bed by solidifying the copper alloy powder for the metal AM at a predetermined position in the powder bed to manufacture an additive manufacturing product.

13. The method for manufacturing an additive manufacturing product according to Claim 12, further comprising:
a heat treatment step of performing a heat treatment in a temperature range of 300°C or higher and a melting point of pure copper or lower after the forming step.

14. The method for manufacturing an additive manufacturing product according to Claim 12, further comprising, after the forming step:
a first heat treatment step of performing a heat treatment in a temperature range of 800°C or higher and a melting point of pure copper or lower, and a second heat treatment step of performing a heat treatment in a temperature range of 300°C or higher and lower than 800°C after the first heat treatment.
